# EUROPEAN PATENT SPECIFICATION

(11) **EP 1 480 812 B1**
(45) Date of publication and mention of the grant of the patent: **16.11.2005**
(21) Application number: 03705525.8
(22) Date of filing: 20.02.2003
(51) Int. Cl.: B29C 65/20, B29K 23/00

(54) **METHOD AND DEVICE FOR BUTT WELDING POLYETHYLENE PIPES AND/OR FITTINGS**
VERFAHREN UND VORRICHTUNG ZUM STUMPFSCHWEISSEN VON POLYETHYLENROHREN UND/ODER KUPPLUNGSSTÜCKEN
PROCEDE ET DISPOSITIF DE SOUDAGE BOUT A BOUT DE TUBES ET/OU DE RACCORDS EN POLYETHYLENE

(30) Priority: 22.02.2002 NL 1020044
(43) Date of publication of application: 01.12.2004
(73) Proprietor: GASTEC N.V., NL-7327 AC Apeldoorn (NL)
(72) Inventor: SCHOLTEN, Frans, Ludgerus, NL-7321 HJ Apeldoorn (NL); VENEMA, Peter, Roelf, NL-7434 PN Lettele (NL)
(74) Representative: Winckels, Johannes Hubertus F.
(86) International application number: PCT/NL2003/000131
(87) International publication number: WO 2003/070452

(56) References cited:
- EP-A- 0 329 349
- WO-A-00/34028
- DD-A- 139 544
- DE-A- 19 958 412
- GB-A- 2 304 072

## Description

The invention relates to a method for butt welding polyethylene pipes and/or fittings.

Such a method is known from practice and is described in *inter alia* the Dutch standard NEN 7200 (Plastics piping for distributing gas, drinking water and waste water; butt welding pipes and fittings of PE of a density of at least 930 kg/m³, 1^{st} impression, July 1988) and in the German standard DVS 2207 Teil 1. In the following, the method will be discussed with respect to the jointing together of polyethylene pipes. However, the method is also suitable, for instance, for butt welding polyethylene pipes to polyethylene fittings and for butt welding polyethylene fittings together.

The welding mirror temperature that is used in the known method is 210 °C in order for the ends of the pipes to melt. In the known method, the pipes are first pressed against the welding mirror for a particular heat-up time at a pressure of 180 kPa and then held against the welding mirror for a particular sustained heating time at a relatively low pressure. Next, the pipes, by way of the ends melted by the welding mirror, are pressed against each other at a welding pressure of 180 kPa for a welding time of at least three minutes, so that a welded joint is formed between those ends. After welding, the pipes are cooled. This method known from practice is suitable to butt weld non-cross-linked polyethylene (PE) pipes together by their ends. The butt welds obtained with this method are relatively little durable.

Non-cross-linked polyethylene (PE) pipes are pipes whose walls are substantially not provided with a crosslinkage.

The walls of crosslinked polyethylene (PEX) pipes, by contrast, are provided with reinforcement chains. PEX pipes are known in three variants, viz. peroxide-crosslinked (PEXa), silane-crosslinked (PEXb) and radiation-crosslinked (PEXc) polyethylene pipes. In a crosslinked condition, the reinforcement chains of such a PEX pipe are chained to each other, such that these chains form a crosslinkage reinforcing the pipe wall of the pipe. This crosslinkage affords the PEX pipes a number of advantageous properties over non-crosslinked polyethylene pipes, for instance a good resistance to elevated temperatures, in particular up to about 95 °C, a relatively long life at a relatively high internal pressure and a relatively high resistance to notch effect and natural gas condensate. Moreover, the resistance to impact loading at relatively low temperatures, normally some tens of °C below 0 °C, is relatively high in PEX pipes.

The above PEXa pipes, in practice, are normally supplied in completely crosslinked condition by a manufacturer of the pipes. This is because the crosslinkage is typically carried out during extrusion of the pipes under the influence of pre-admixed peroxide. Normally, therefore, PEXa pipes can be butt welded together only in the already crosslinked condition, for instance during the installation of the pipes.

The PEXc pipes are normally, after extrusion, wholly non-crosslinked. These PEXc pipes can typically be crosslinked only in an industrial environment, for instance in a separate crosslinkage plant, since to that end a high power source, for instance a powerful electron beam, gamma radiation and/or X-ray radiation source, must be utilized. Normally, therefore, PEXc pipes are likewise supplied exclusively as completely crosslinked pipe.

PEXb pipes are normally still non-crosslinked after extrusion, but already contain the silane needed for crosslinkage. The term 'non-crosslinked' can in this case be understood to mean a content of crosslinked chains (the 'gel content') in the range of about 0-30%, in particular a gel content lower than about 10%. A PEXb pipes which has not been crosslinked yet is sometimes referred to as a crosslinkable PEXb pipe. These crosslinkable PEXb pipes can, after the extrusion, be readily crosslinked with hot water or steam. Therefore, crosslinkage of crosslinkable PEXb pipes can be readily realized outside an industrial environment, for instance through sufficiently long contact with water or steam of a sufficiently high temperature, in particular 70-95 °C. Crosslinkage of such PEXb pipes is possible at lower temperatures as well. Thus, crosslinkage can even occur at temperatures of 5 °C. The crosslinkage of crosslinkable PEXb pipes results in crosslinked PEXb pipes, in which case the term 'crosslinked' is to be understood to mean a gel content of at least about 50% and more in particular at least about 60%.

An advantage of the use of crosslinkable PEXb pipes over PEXa and PEXc pipes is that the PEXb pipes, after butt welding, can be simply crosslinked to reinforce the pipes outside an industrial environment, for instance at the site of installation of a piping system. The major additional advantage is that normally in this manner of *in situ* crosslinkage the butt welds made between the pipes are thereby crosslinked as well. Thus, a very strong butt weld can be obtained, because the crosslinked structure of the PEXb material can extend through the welding face of that butt weld.

The known method is disadvantageous in particular because it is not well suited for butt welding crosslinkable PEXb pipes. This is because especially when the outer surfaces of crosslinkable PEXb pipes are already crosslinked to some extent, the application of the known method has been found in practice to lead to butt welds of a relatively poor quality, which becomes manifest *inter alia* in rupture of the weld after a very short period under mechanical loading. Such a partial crosslinkage of the PEXb pipes can easily arise, for instance, when the crosslinkable PEXb pipes remain unused for a particular period without being properly shielded from air, as during storage and/or transport of the pipes. In that case, a gradual crosslinkage of the pipe surfaces can occur through contact with water vapor contained in the air. Further, outer surfaces of the PEXb pipes may already be crosslinked to some extent during manufacture of those pipes, which can occur, for instance, when the pipes are cooled with water after extrusion.

EP-A-329349 discloses a prior art method.

The object of the invention is to provide a method according to the opening paragraph, wherein polyethylene pipes and/or fittings can be butt welded together and which is suitable in particular for butt welding crosslinkable slightly crosslinked PEXb pipes and/or fittings.

To that end, the method according to the invention is characterized by the features of claim 1.

Surprisingly, it has been found that the butt welding of the polyethylene pipes at the welding pressure mentioned and at the welding temperature mentioned leads to a butt weld having a strength and life that does satisfy the requirements to be imposed. Thus, it is found that between non-crosslinked polyethylene pipes that have been butt welded to each other according to the present method, a relatively good, strong welded joint is formed. The life of a welded joint, made at a welding pressure of about 270 kPa and a welding temperature of about 180 °C, proves to be about 50% higher in a constant load test performed thereon, compared with a welded joint obtained with a standard procedure, at a welding pressure of about 180 kPa and 210 °C.

Especially when butt welding at least one crosslinkable PEXb pipe having a slightly crosslinked surface, relatively good butt welds prove to be obtained when using the welding pressure mentioned. The PEXb pipe to be butt welded with this method can have, for instance, a content of crosslinked chains that is in the range of about 0 - 50%, more particularly in the range of about 0-30%. In addition, the method can be applied to at least one PEXb pipe that has a content of crosslinked chains that is greater than about 50% and more particularly is at least about 60%. Further, at least one of the pipes to be butt welded can comprise a non-crosslinkable PE pipe.

Owing to the welding mirror temperature being lower than 210 °C, it proves in practice that despite the high welding pressure, still a relatively small ridge is formed between the pipes that are welded together. Moreover, the application of this relatively low welding mirror temperature is advantageous from an energy point of view. In addition, a cooling time of the pipes after butt welding can be shortened considerably by the application of this relatively low welding temperature. This provides the advantage that relatively soon after butt welding and cooling of a first pair of pipes a next pair of pipes can be welded. Thus, relatively many pipes can be butt welded during a particular period of time. Preferably, the welding mirror temperature is in the range of about 130 °C- 200 °C. More in particular, the welding mirror temperature is in the range of about 150 °C - 190 °C.

It is noted that European patent application EP 0 329 349 describes a method in which polyethylene pipes are butt welded together at a temperature in the range of 190-220 °C and at a pressure in the range of 100-200 kPa. This method turns out not to lead to the surprisingly durable joint that can be obtained with the method according to the present invention. Further, DD 139 544 discloses a method in which completely crosslinked PEX pipes are jointed together by butt welding at a temperature of minimally 450°C and a pressure of minimally 500 kPa. A disadvantage of this method is that it proceeds relatively slowly, and that it yields welded joints of a short life.

According to an advantageous elaboration of the invention, the heating pressure mentioned is lower than about 180 kPa.

In practice, good butt welds between the polyethylene pipes prove to be obtained with this relatively low heating pressure. Preferably, the heating pressure is less than about 75 kPa. Very good welding results are found to be obtained when the heating pressure is in the range of 0-20 kPa. The use of a pressure in this latter range can be carried out relatively easily. Moreover, undesired ridge formation during the heating of the pipes can be avoided in this way. The heating pressure can be, for instance, substantially 0 kPa, so that the method does not include any heat-up step under pressure but only a sustained heating step.

According to a further elaboration of the invention, the heating time is in the range of about 40-80 s and more in particular in the range of about 60-80 s.

By the use of this relatively short heating time, heating of the pipe ends can be carried out relatively fast. Moreover, heating of the pipe ends can thus be carried out with relatively little energy. Further, it is an advantage that the cooling-off phase is shortened as a result of the short heating time, since relatively little material has been heated up during that short heating time.

The invention further provides a device that is characterized by the features of claim 13.

Owing to the device being provided with pressure means that are arranged to press the pipes against each other with a welding pressure that is greater than 200 kPa, it is possible, utilizing this device, to obtain butt welds of a relatively high quality when welding crosslinkable PEXb pipes. The welding mirror of the device is preferably provided with heating means to bring the welding mirror to a welding mirror temperature that is at least in the range of 130 °C - 210 °C and in particular in the range of about 130 °C- 200 °C. Advantages of the use of these welding temperatures have been mentioned hereinabove. The device can be provided with pressure means that are arranged to press the pipes by their ends against the welding mirror with a heating pressure that is at least in the range of about 0 - 180 kPa and in particular in the range of about 0-20 kPa.. These pressure means can comprise, for instance, the same pressure means as said means for pressing the pipes against each other and/or other pressure means. With such a device, the method can be readily carried out. Thus, the device can comprise, for instance, an automatic welding machine with preprogrammable welding parameters.

The invention will be further clarified on the basis of an exemplary embodiment and the drawing. In the drawing:
Fig. 1 shows a first step of a method according to the invention; and
Fig. 2 shows a second step of a method according to the invention.

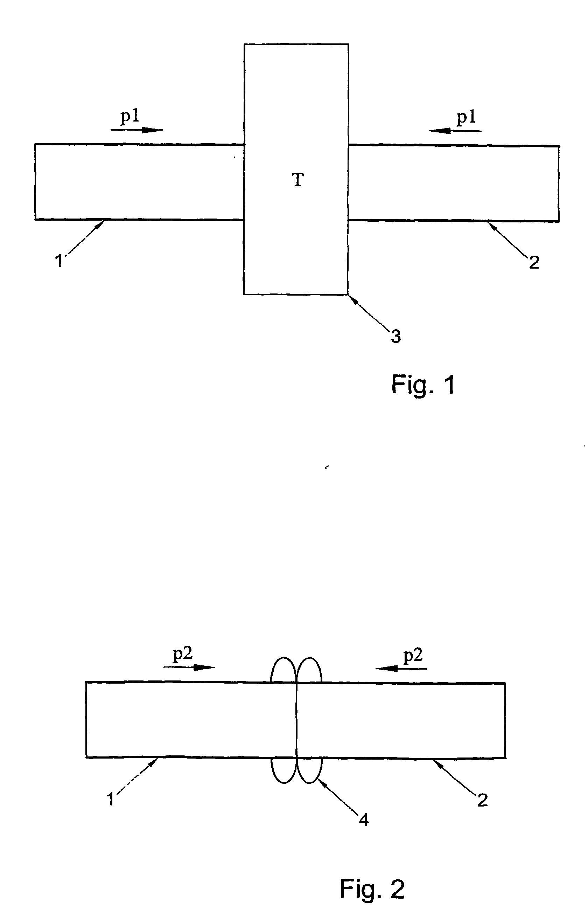

Fig. 1 shows a first step for butt welding two polyethylene pipes 1, 2. In this step, the pipes 1, 2 having ends to be welded together are heated by pressing the ends with a particular heating pressure p1, and for a particular heating time t1, against a welding mirror 3 brought to a welding mirror temperature T, with a heating pressure p1 that is lower than about 180 kPa. The welding mirror 3 is provided with heating means, not shown, to bring the mirror 3 to the desired temperature T, for instance an electric resistor. Further provided are means, not shown, for pressing the pipes 1, 2 against the welding mirror, and against each other, respectively. The welding mirror temperature T of the mirror 3 is at least equal to a melting point of the polyethylene pipes to be welded. As a result, the ends of the pipes 1, 2 brought against the welding mirror 3 at least to some extent will soften and/or melt.

Fig. 2 shows a next, second step, in which the heated ends of the pipes 1, 2 are pressed against each other with a particular welding pressure p2 that is higher than 200 kPa. Owing to the ends of the pipes 1, 2 having been heated by the welding mirror 3 during the first step, the ends of the pipes 1, 2 can enter into a welded joint with each other under the influence of that welding pressure p2. As is represented in Fig. 2, welding ridges 4 may form adjacent the ends of the pipes pressed against each other.

Table 1 shows results of the application of a method according to the known NEN7200 standard and of methods A-B according to the invention. In each method, crosslinkable PEXb pipes having a crosslinked surface have been butt welded together. Next, the butt welds were tested by means of a long-term strength test at 80 °C in 2% detergent.

**Table 1.**

| *Long-term testing at 80 °C in 2% detergent on butt welds with crosslinkable PEXb pipes with crosslinked skin at an axial tensile strain of 4.8 MPa*. | | | | |
|---|---|---|---|---|
| Welding pressure p2 (kPa) | method | Heating time t1 (seconds) | Welding mirror Temperature T (°C) | Time until rupture (hours) |
| 180 | NEN | | 210 | 29.6 (14.4) |
| 320 | A | 80 | 190 | > 1300 |
| 320 | B | 60 | 170 | > 1300 |

Table 1 shows that the butt welding method according to the NEN 7200 standard in the case of crosslinkable PEXb pipes with crosslinked skin leads to a relatively low long-term strength, since the time until rupture is relatively low. A relatively good long-term strength, by contrast, is obtained at relatively low mirror temperatures of, for instance, 170 to 190 °C, a welding pressure raised to, for instance, 320 kPa and a total welding time, apart from the cooling-off time, of, for instance, 60 or 80 seconds. The heating time t1 can comprise, for instance, only a heat-up time without sustained heating time, so that the method can be carried out relatively fast.

The use of relatively low welding mirror temperatures, such as 170 or 190° C, has as an additional advantage that the cooling-off time of the butt weld made, can be reduced, which yields a saving of time compared with conventional butt welding methods, as according to the NEN 7200 standard, so that relatively many butt welds per unit time can be produced.

It will be evident that the invention is not limited to the exemplary embodiment described. Various modifications are possible within the framework of the invention as is set forth in the following claims.

Thus, the base material of PEXb can comprise various materials, for instance a copolymer of ethylene and a vinyl alkoxy silane, polyethylene having provided thereon, through graft polymerization, vinyl alkoxy silane and/or vinyl trimethoxy silane and/or other materials.

Further, the method according to the invention can be used to joint together several non-crosslinked polyethylene pipes and/or fittings, for instance end sleeves, T-pieces and the like.

## Claims

1. A method for butt welding polyethylene pipes and/or fittings, wherein at least one of the pipes (1, 2) and/or fittings comprises a crosslinkable PEXb pipe and/or a crosslinkable PEXb fitting, or a non-crosslinkable PE pipe and/or non-crosslinkable PE fitting, wherein ends of the pipes and/or fittings to be welded together are heated by pressing the ends with a particular heating pressure and for a particular heating time against a welding mirror brought to a welding mirror temperature, wherein the welding mirror temperature (T) is lower than 210 °C, wherein, after removal of the welding mirror, the heated ends of the pipes and/or fittings are pressed against each other with a particular welding pressure, wherein the welding pressure (p2) is higher than 200 kPa.

2. A method according to claim 1, **characterized in that** the welding pressure (p2) is lower than about 500 kPa.

3. A method according to claim 1 or 2, **characterized in that** the welding pressure (p2) is in the range of about 250 kPa - 500 kPa.

4. A method according to claim 3, **characterized in that** the welding mirror temperature (T) is in the range of 130 °C - 200 °C.

5. A method according to any one of the preceding claims, **characterized in that** the welding mirror temperature (T) is in the range of about 150 °C - 190 °C.

6. A method according to any one of the preceding claims, **characterized in that** said heating pressure (p1) is lower than about 180 kPa.

7. A method according to claim 6, **characterized in that** the heating pressure (p1) is less than about 75 kPa.

8. A method according to claim 6 or 7, **characterized in that** the heating pressure (p1) is in the range of 0-20 kPa and in particular is substantially 0 kPa.

9. A method according to any one of the preceding claims, **characterized in that** the heating time (t) is in the range of about 40 -80 s and more in particular is in the range of 60 - 80 s.

10. A method according to any one of the preceding claims, **characterized in that** at least one of the pipes and/or fittings comprises a non-crosslinked pipe.

11. A method according to any of the preceding claims, **characterized in that** the at least one crosslinkable PEXb pipe (1, 2) and the at least one crosslinkable PEXb fitting, respectively, has a content of crosslinked chains that is in the range of 0-50%, more in particular in the range of 0-30%.

12. A method according to any one of the preceding claims, **characterized in that** at least one of the pipes (1, 2) and/or fittings comprises a crosslinked PEXb pipe or fitting, respectively, in particular having a content of crosslinked chains greater than about 50%, more in particular having a content of crosslinked chains greater than about 60%.

13. A device for carrying out a method according to any one of the preceding claims, wherein the device is provided with pressure means and a welding mirror, wherein the pressure means are arranged to press the pipes and/or fittings by ends against the welding mirror, and against each other, respectively, the pressure means are arranged to press the pipes (1, 2) and/or fittings against each other with a welding pressure (p2) that is greater than 200 kPa, **characterised in that** the device is provided with a control which is arranged for driving the device in such a manner that a method according to any one of claims 1-12 is traversed.

14. Use of a device, which device is provided with pressure means and a welding mirror, wherein the pressure means are arranged to press the pipes and/or fittings by ends against the welding mirror, and against each other, respectively, wherein the pressure means are arranged to press the pipes (1, 2) and/or fittings against each other with a welding pressure (p2) that is greater than 200 kPa, wherein the device is used in carrying out a method for butt welding polyethylene pipes and/or fittings according to any of claims 1-12.

## Patentansprüche

1. Verfahren zum Stumpfschweißen von Polyethylenrohren und/oder -formstücken, bei dem mindestens eines der Rohre (1, 2) und/oder Formstücke ein vernetzbares PE-Xb-Rohr und/oder ein vernetzbares PE-Xb-Formstück oder ein nicht vernetzbares PE-Rohr und/oder nicht vernetzbares PE-Formstück aufweist, wobei Enden der zusammenzuschweißenden Rohre und/oder Formstücke erwärmt werden, indem die Enden mit einem bestimmten Erwärmungsdruck und für eine bestimmte Erwärmungszeit gegen einen auf eine Schweißspiegeltemperatur gebrachten Schweißspiegel gedrückt werden, wobei die Schweißspiegeltemperatur (T) niedriger als 210 °C ist und wobei die erwärmten Enden der Rohre und/oder Formstükke nach Entfernung des Schweißspiegels mit einem bestimmten Schweißdruck gegeneinander gedrückt werden, wobei der Schweißdruck (p2) höher als 200 kPa ist.

2. Verfahren nach Anspruch 1, **dadurch gekennzeichnet, daß** der Schweißdruck (p2) niedriger als ungefähr 500 kPa ist.

3. Verfahren nach Anspruch 1 oder 2, **dadurch gekennzeichnet, daß** der Schweißdruck (p2) in dem Bereich von ungefähr 250 kPa bis 500 kPa liegt.

4. Verfahren nach Anspruch 3, **dadurch gekennzeichnet, daß** die Schweißspiegeltemperatur (T) in dem Bereich von 130 °C bis 200 °C liegt.

5. Verfahren nach einem der vorhergehenden Ansprüche, **dadurch gekennzeichnet, daß** die Schweißspiegeltemperatur (T) in dem Bereich von ungefähr 150 °C bis 190 °C liegt.

6. Verfahren nach einem der vorhergehenden Ansprüche, **dadurch gekennzeichnet, daß** der Erwärmungsdruck (p1) niedriger als ungefähr 180 kPa ist.

7. Verfahren nach Anspruch 6, **dadurch gekennzeichnet, daß** der Erwärmungsdruck (p1) geringer als ungefähr 75 kPa ist.

8. Verfahren nach Anspruch 6 oder 7, **dadurch gekennzeichnet, daß** der Erwärmungsdruck (p1) in dem Bereich von 0 bis 20 kPa liegt und insbesondere im wesentlichen 0 kPa beträgt.

9. Verfahren nach einem der vorhergehenden Ansprüche, **dadurch gekennzeichnet, daß** die Erwärmungszeit (t) in dem Bereich von ungefähr 40 bis 80 s liegt und ferner insbesondere in dem Bereich von 60 bis 80 s liegt.

10. Verfahren nach einem der vorhergehenden Ansprüche, **dadurch gekennzeichnet, daß** mindestens eines der Rohre und/oder Formstücke ein nicht vernetzbares Rohr aufweist.

11. Verfahren nach einem der vorhergehenden Ansprüche, **dadurch gekennzeichnet, daß** das mindestens eine vernetzbare PE-Xb-Rohr (1, 2) bzw. das mindestens eine vernetzbare PE-Xb-Formstück einen Gehalt vernetzter Ketten hat, der in dem Bereich von 0 bis 50% liegt und ferner insbesondere in dem Bereich von 0 bis 30%.

12. Verfahren nach einem der vorhergehenden Ansprüche, **dadurch gekennzeichnet, daß** mindestens eines der Rohre (1, 2) und/oder Formstücke ein vernetztes PE-Xb-Rohr bzw. -Formstück aufweist, das insbesondere einen Gehalt vernetzter Ketten hat, der größer als ungefähr 50% ist, und ferner insbesondere einen Gehalt vernetzter Ketten hat, der größer als ungefähr 60% ist.

13. Vorrichtung zur Ausführung eines Verfahrens nach einem der vorhergehenden Ansprüche, wobei die Vorrichtung mit Druckmitteln und einem Schweißspiegel ausgestattet ist, wobei die Druckmittel ausgestaltet sind, um die Rohre und/oder Formstücke mit Enden gegen den Schweißspiegel bzw. gegeneinander zu drücken, und die Druckmittel ausgestaltet sind, um die Rohre (1, 2) und/oder Formstücke mit einem Schweißdruck (p2) gegeneinander zu drücken, der größer als 200 kPa ist, **dadurch gekennzeichnet, daß** die Vorrichtung mit einer Steuerung ausgestattet ist, die ausgestaltet ist, um die Vorrichtung in einer solchen Weise zu betreiben, daß ein Verfahren nach einem der Ansprüche 1 bis 12 durchlaufen wird.

14. Verwendung einer Vorrichtung, die mit Druckmitteln und einem Schweißspiegel ausgestattet ist, wobei die Druckmittel ausgestaltet sind, um die Rohre und/oder Formstücke mit Enden gegen den Schweißspiegel bzw. gegeneinander zu drükken, wobei die Druckmittel ausgestaltet sind, um die Rohre (1, 2) und/oder Formstücke mit einem Schweißdruck (p2) gegeneinander zu drücken, der größer als 200 kPa ist, wobei die Vorrichtung bei der Ausführung eines Verfahrens zum Stumpfschweißen von Polyethylenrohren und/oder -formstükken nach einem der Ansprüche 1 bis 12 verwendet wird.

## Revendications

1. Procédé de soudage bout à bout de tuyaux et/ou raccords en polyéthylène, au moins l'un des tuyaux (1, 2) et/ou raccords étant un tuyau en polyéthylène réticulé PEXb et/ou un raccord en polyéthylène réticulé PEXb, ou un tuyau en polyéthylène non-réticulé PE et/ou un raccord en polyéthylène non-rétiulé PE, dans lequel procédé l'on chauffe les extrémités des tuyaux et/ou raccords à souder ensemble en pressant ces extrémités, en exerçant une pression de chauffage particulière pendant un laps de temps de chauffage particulier, contre un miroir à souder porté à une certaine température de miroir à souder, laquelle température T de miroir à souder est inférieure à 210 °C, puis, après avoir retiré le miroir à souder, on presse l'une contre l'autre les extrémités chauffées des tuyaux et/ou raccords en exerçant une pression de soudage particulière, laquelle pression de soudage p2 est supérieure à 200 kPa.

2. Procédé conforme à la revendication 1, **caractérisé en ce que** la pression de soudage p2 est inférieure à environ 500 kPa.

3. Procédé conforme à la revendication 1 ou 2, **caractérisé en ce que** la pression de soudage p2 vaut à peu près de 250 à 500 kPa.

4. Procédé conforme à la revendication 3, **caractérisé en ce que** la température T de miroir à souder vaut à peu près de 130 à 200 °C.

5. Procédé conforme à l'une des revendications précédentes, **caractérisé en ce que** la température T de miroir à souder vaut à peu près de 150 à 190 °C.

6. Procédé conforme à l'une des revendications précédentes, **caractérisé en ce que** ladite pression de chauffage p1 est inférieure à environ 180 kPa.

7. Procédé conforme à la revendication 6, **caractérisé en ce que** la pression de chauffage p1 vaut moins d'environ 75 kPa.

8. Procédé conforme à la revendication 6 ou 7, **caractérisé en ce que** la pression de chauffage p1 vaut de 0 à 20 kPa, et en particulier, vaut pratiquement 0 kPa.

9. Procédé conforme à l'une des revendications précédentes, **caractérisé en ce que** la durée de chauffage t vaut à peu près de 40 à 80 s, et plus particulièrement, de 60 à 80 s.

10. Procédé conforme à l'une des revendications précédentes, **caractérisé en ce qu'**au moins l'un des tuyaux et/ou raccords est un tuyau en PE non-réticulé.

11. Procédé conforme à l'une des revendications précédentes, **caractérisé en ce que** ledit tuyau (1, 2) en polyéthylène réticulé PEXb au nombre d'au moins un et ledit raccord en polyéthylène réticulé PEXb au nombre d'au moins un présentent chacun une teneur en chaînes réticulées qui vaut de 0 à 50 %, et plus particulièrement de 0 à 30 %.

12. Procédé conforme à l'une des revendications précédentes, **caractérisé en ce qu'**au moins l'un des tuyaux (1, 2) et/ou raccords est, respectivement, un tuyau ou raccord en polyéthylène réticulé PEXb présentant une teneur en chaînes réticulées qui est en particulier supérieure à environ 50 %, et plus particulièrement, supérieure à environ 60 %.

13. Dispositif permettant de mettre en oeuvre un procédé conforme à l'une des revendications précédentes, lequel dispositif est muni de moyens d'application de pression et d'un miroir à souder, lesquels moyens d'application de pression sont disposés de manière à permettre de presser les tuyaux et/ou raccords, par leurs extrémités, contre le miroir à souder, ainsi que les uns contre les autres, respectivement, ces moyens d'application de pression étant disposés de manière à permettre de presser les tuyaux (1, 2) et/ou raccords les uns contre les autres avec une pression de soudage p2 supérieure à 200 kPa, **caractérisé en ce que** le dispositif est muni d'un appareil de commande qui est conçu pour conduire le dispositif de telle manière que se déroule un procédé conforme à l'une des revendications 1 à 12.

14. Emploi d'un dispositif, lequel dispositif est muni de moyens d'application de pression et d'un miroir à souder, lesquels moyens d'application de pression sont disposés de manière à permettre de presser les tuyaux et/ou raccords, par leurs extrémités, contre le miroir à souder, ainsi que les uns contre les autres, respectivement, ces moyens d'application de pression étant disposés de manière à permettre de presser les tuyaux (1, 2) et/ou raccords les uns contre les autres avec une pression de soudage p2 supérieure à 200 kPa, et lequel dispositif est employé pour mettre en oeuvre un procédé, conforme à l'une des revendications 1 à 12, de soudage bout à bout de tuyaux et/ou raccords en polyéthylène.
